# EUROPEAN PATENT SPECIFICATION

(11) **EP 1 221 882 B1**
(45) Date of publication and mention of the grant of the patent: **25.11.2009**
(21) Application number: 00969469.6
(22) Date of filing: 06.10.2000
(51) Int. Cl.: A47J 37/04

(54) **CYLINDRICAL APPARATUS FOR HEATING OF ARTICLES OF FOOD BY MEANS OF HOT AIR**
ZYLINDRISCHE VORRICHTUNG ZUM ERWÄRMEN VON LEBENSMITTELN MITTELS HEISSLUFT
APPAREIL CYLINDRIQUE DESTINE AU CHAUFFAGE D'ARTICLES ALIMENTAIRES AU MOYEN D'AIR CHAUD

(30) Priority: 07.10.1999 BE 9900665
(43) Date of publication of application: 17.07.2002
(73) Proprietor: Tumble-Woc B.V., 2141 BR Vijfhuizen (NL)
(72) Inventor: Hoeberigs, Jean-Marie Mathieu, 4524 AS Sluis (NL)
(74) Representative: Grubert, Andreas
(86) International application number: PCT/EP2000/009920
(87) International publication number: WO 2001/024673

(56) References cited:
- WO-A-89/10085
- US-A- 5 780 815

## Description

### Field of the invention.

The invention relates to an apparatus for the baking of articles of food such as french fries, for example, frozen french fries, mini croquettes, potato nuggets, etc...

The term "baking" is understood to mean heating up, baking as well as unfreezing.

An apparatus of the so-called "dry method" is concerned here.

This so-called dry method for the heating of french fries is in contradiction with the wet method. In the dry method the articles of food are not dipped in a bath of heated oil or fat. They are baked in advance or provided with the required amount of fat. During the heating no big quantity of fat or oil is required any more. This avoids immediately all disadvantages of the wet method such as fire danger and too high a consumption of fat.

### State of the art.

Apparatus which apply the dry method exist already.

Some of these apparatus comprise a cylindrical receptacle to house the articles of food and a heating room where means are housed for the creation of a hot air circulation in the heating room and the receptacle and / or means for the creation of an infrared radiation to the receptacle. The receptacle is rotatable around a substantially horizontal axis.

These existing apparatus are described, amongst others, in FR-A1-2 625 668 (Sogétec), DE-C1-44 01 281 (Eloma), FR-A1-2 452 906 (Dyona), DE-A1-41 24 742 (Eloma) and in WO-A1-96/00027.

All these apparatus, however, have as disadvantage that:
- either the required electrical power is at the higher side, i.e. substantially above 2500 Watt, even for domestic use,
- or the required baking time is rather long, i.e. substantially longer than three minutes, which leads to articles of food which are dried up and which are no longer crispy.

US-A-5,780,815 discloses a hot air oven with a cyclindrical receptacle rotatable around a horizontal axis. The ratio L/D of the length L to the diameter D of the receptable is smaller than 1.0.

### Summary of the invention.

It is an object of the invention to avoid the disadvantages of the prior art. It is another object of the invention to provide a heating apparatus which, at least for domestic use, needs an electrical power of less than 2500 Watt. It is still another object of the invention to provide a heating apparatus which requires less than 3 minutes to bake articles of food such as french fries crispy. It is an additional object of the invention to provide a heating apparatus which is flexible so that one or more portions of articles of food can be baked simultaneously.

The invention provides an apparatus for the baking of articles of food such as french fries. The apparatus comprises a cylindrical receptacle to house the articles of food during the baking and a heating room where means are housed for creating a hot air circulation in the heating room and the receptacle and/or for creating an infrared radiation to the receptacle. The receptacle is rotatable around a substantially horizontal axis to subject the articles of food to a continuous movement during the baking. The heating room rotates together with the receptacle, what enables an easy manufacture of the apparatus. The receptacle is separate from the heating room. So the means for creating a hot air circulation and the means for creating an infrared radiation are not housed in the receptacle. As a result the receptacle can be cleaned easily. The receptacle has a length L and a diameter D. The ratio UD of the length to the diameter of the receptacle is smaller than 1.0, e.g. smaller than 0.9, preferably smaller than 0.8, in order to obtain an optimal spreading of the heat and / or working of the infrared radiation. This has as consequence that either less power is required, or the baking times are considerably reduced.

All the above-mentioned prior art documents except US-A-5,780,815 are silent about this L/D characteristic. These documents either disclose a receptacle which is housed inside a much greater room, inside of which is the circulation of air, or they disclose receptacles with L/D ratios which are much greater than 1.0.

In a preferable embodiment of the invention, the receptacle is subdivided into two or more chambers. The chambers can be separated from each other by means of a wire structure which is heat resistant, which passes the hot air, but which does not pass the articles of food. By the use of two or more chambers an improved distribution of the individual articles of food is obtained. If, moreover, every chamber can be separately filled and emptied, then the flexibility of the heating apparatus is increased considerably. Indeed, in this case every chamber can be filled with either a portion which is smaller than or equal to the portion in the adjacent chamber or with other articles of food. The baking times can be separately tuned for the separate chambers.

In an embodiment of the heating apparatus for professional and daily use in a restaurant, four separate chambers can be provided in this way.

The wire structures can be removed from the apparatus in order to form again one single great receptacle or in order to be cleaned.

In the heating apparatus the receptacle is further provided with carrier members to subject the articles of food to a continuous movement during the rotation of the receptacle. These carrier members are in number and location such that they assure an optimal distribution of the articles of food over the whole receptacle or over each chamber separately, in case there is more than one chamber. The carrier members must hinder as little as possible the infrared radiation and the hot air circulation.

In a determined embodiment the receptacle is further provided with a substantially horizontal rod which is centrally mounted in the receptacle. The carrier members are radially attached on this rod.

In another embodiment receptacle is closed, at the other side of the heating room, by means of a frontal plate. A rod is attached to this frontal plate in a substantially horizontal way. Carrier members, e.g. in the form of pins, may be attached to this rod.

The heating apparatus is built in a user-friendly way. So the receptacle and the heating room are jointly or separately mountable. Preferably the receptacle can be removed from the heating room in order to be cleaned thoroughly without having to touch the electrical elements of the heating room.

### Brief description of the drawings.

The invention will now be explained on the basis of drawings wherein
- Figure 1 represents a longitudinal section of an apparatus according to the invention ;
- Figure 2 is a cross-section of the apparatus according to the plane II-II of Figure 1 ;
- Figure 3 is a cross-section of the apparatus according to the plane III-III of Figure 1;
- Figure 4 shows a front view of a wire structure which is used to divide the receptacle of an apparatus in various chambers;
- Figure 5 shows a cross-section of a wire structure according to plane V-V of Figure 4 ;
- Figure 6 shows a schematic section of a receptacle of an apparatus which is divided into various chambers.

### Detailed description of a preferable embodiment

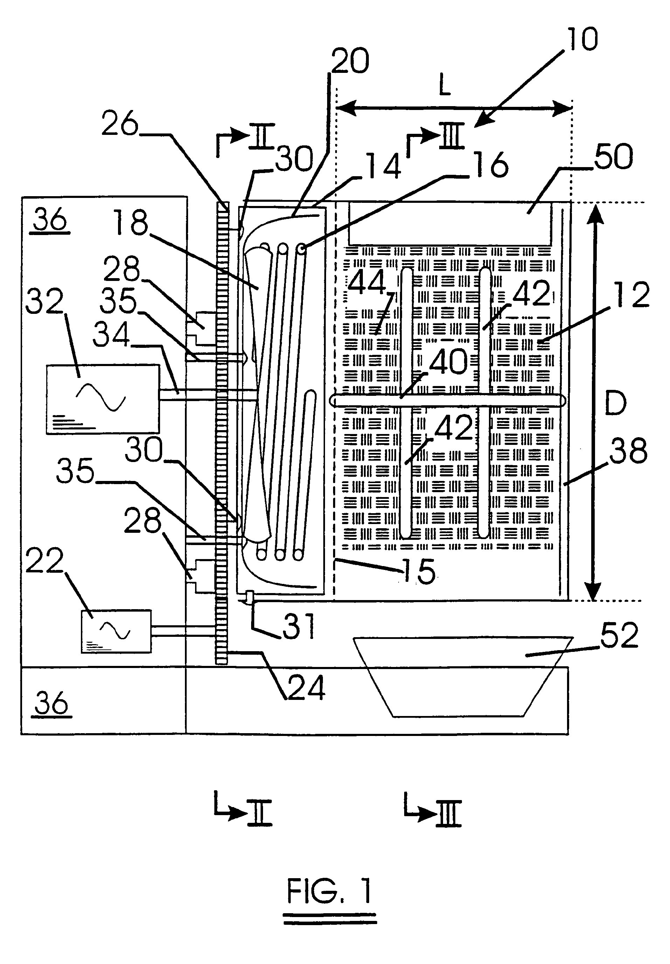

Figure 1 represents a longitudinal section of a first embodiment of an apparatus 10 according to the invention.

Apparatus 10 comprises mainly a cylindrical receptacle 12 and a heating room 14. The articles of food are baked in the receptacle 12. The receptacle is limited by a wire screen 15 and by a front window 38. The wire screen prevents the articles of food from penetrating into the heating room 14. The receptacle 12 has a(n) (inner) length L and a(n) (inner) diameter D. The ratio UD of length to diameter is smaller than 1.0, e.g. smaller than 0.9, and is e.g. 0.60 or 0.70.

The heating room 14 houses electrical resistances 16 which radiate infrared when in working. The electrical power is e.g. 1600 Watt. A ventilator 18 provides for the creation of a hot air circulation. The hot air circulation is deflected to the receptacle by means of a reflector screen 20.

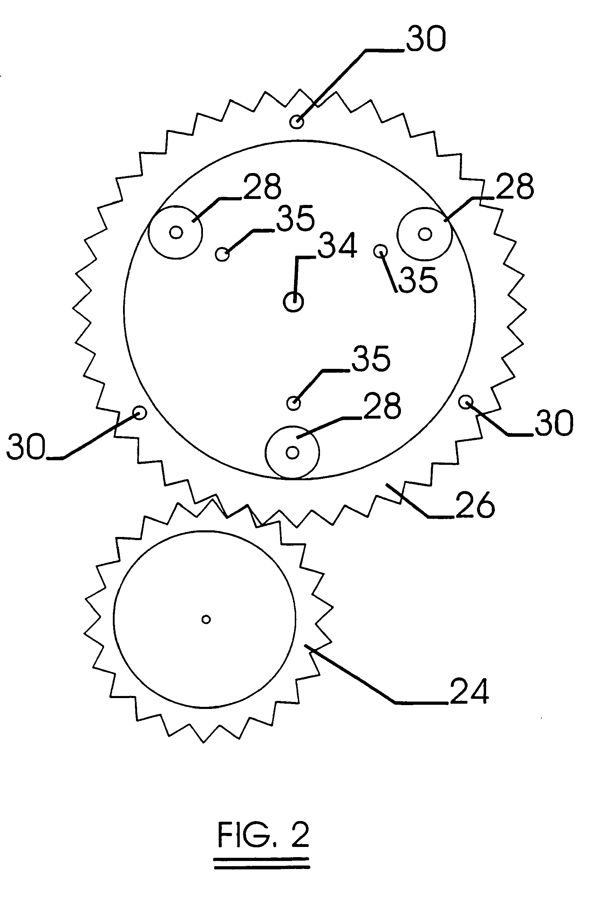

Figure 1 and Figure 2 make the working of the drive mechanism clear.

An electrical motor 22 drives a small toothed wheel 24. This small toothed wheel 24 drives a greater toothed wheel 26. This greater toothed wheel 26 is carried out in a hollow way and is guided by means of three guiding rolls 28. Three connections 30 connect the heating room 14 to the greater toothed wheel 26. By reason of the fact that the receptacle 12 is connected to the heating room 14 by means of removable screws 31, the greater toothed wheel 26, the heating room 14 as well as the receptacle 12 rotate around a substantially horizontal axis during the functioning of the apparatus 10. The rotation speed is e.g. ten rotations per minute. A click connection or a bayonet closing may be used instead of removable screws 31.

Instead of the smaller toothed wheel 24, a cylindrical drive by means of a roughened driving axis can be used. This co-operates with a wear resistant packing support which replaces the greater toothed wheel 26. This driving has as advantage that the rattling noise of toothed wheel transmission is avoided. Another advantage is that the overload of the drive motor is avoided in case of counteraction. By releasing connections 30 the heating room 14 and the receptacle 12 can be removed from the greater toothed wheel 26. By removing the screws 31 the receptacle 12 can be dismantled from the heating room 14.

A second electrical motor 32 drives the ventilator 18 via axle 34 through the hollow inner room of the greater toothed wheel 26. The rotation speed of the ventilator is typically 1500 rotations per minute.

It goes without saying that other driving mechanisms are possible. In this way electrical motors 22 and 32 can be replaced by one single motor and a set of toothed wheels.

Three connections screws 35 connect the reflector 20 with a fixed basis 36 also through the hollow inner room of the greater toothed wheel 26.

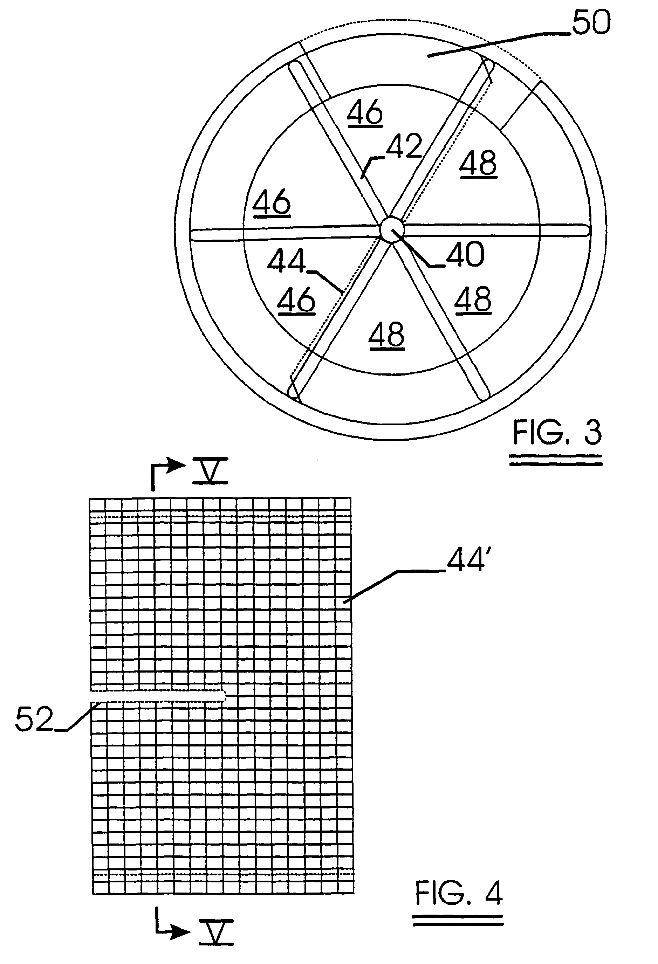

Figure 1 and Figure 3 make a first design of the receptacle 12 clear. A front window 38 out of heat resistant glass closes the receptacle 12 at the other side of the heating room 14. A central and substantially horizontal rod 40 is connected to the front window 38. The front window is transparent so that the baking process can be closely followed.

Carrier members 42, in the form of pins, are radially connected to the central rod 40 and serve to subject the articles of food to a continuous movement. The carrier members 42 are not strictly necessary.

The receptacle is subdivided in two chambers 46 and 48 by means of a wire structure 44. Such a wire structure 44 is preferably made of stainless steel. For example, stainless steel wires with a diameter of 0.80 mm and aperture widths of 270 mm between two adjacent wires form a suitable wire structure 44. A subdivision into more than two chambers, e.g. in four chambers, is also possible. The wire structure 44 is such that the hot air circulation is hindered as little as possible and that the articles of food are prevented from moving from one chamber 46 to the other chamber 48, or vice versa. The chambers 46, 48 can be filled with separate portions, for example a greater portion and a smaller portion, or for example a portion french fries and a portion mini croquettes. Separate baking times can be tuned for the various chambers. A typical baking time for a portion of french fries does not take longer than two minutes.

The subdivision in chambers has as advantage that a better spreading of the articles of food can be obtained during the baking without this being to the detriment of the hot air circulation or the infrared working, rather to the advantage. Furthermore, the subdivision into chambers reduces the necessity of the carrier members 42.

A recess 50 in the cylinder partition of the receptacle 12 is provided for the introduction of the articles of food before baking. At the bottom the articles of food are received in a small box 52 after the baking.

Figures 4, 5 and 6 illustrate a second and preferable embodiment where two wire structures 44' and 44" divide the receptacle 12 in four different chambers 46', 46", 48' and 48" and where a central rod 40 is not present.

Figure 4 presents a wire structure 44' which is cut in the middle until somewhat more than the half so as to show an aperture 52 do that this can be pushed with a second similar wire structure 44" crosswise in each other to form in this way four different chambers in the receptacle 12.

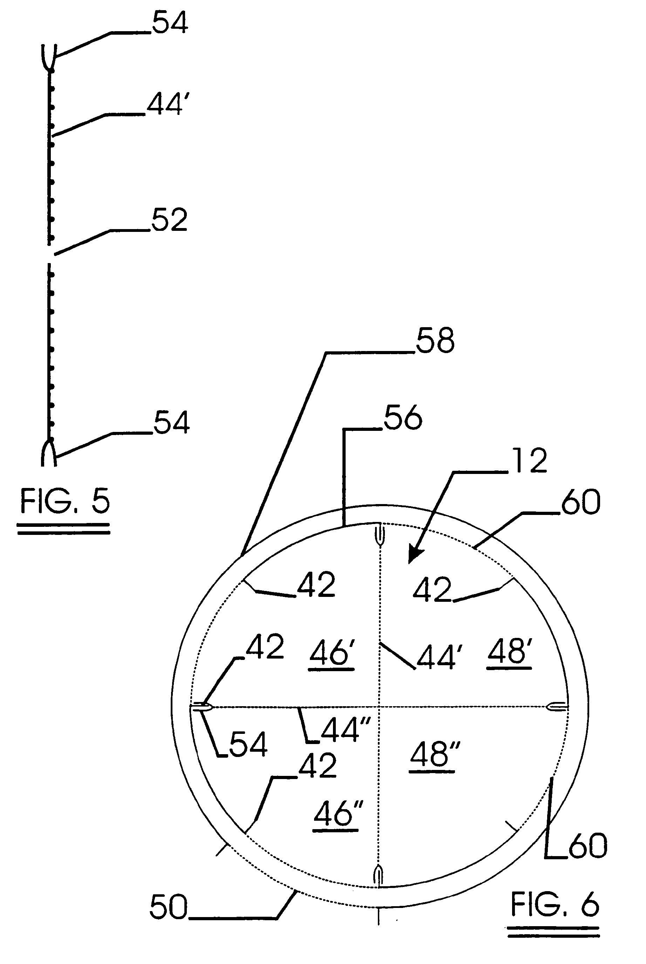

Figure 5 presents a cross-section of the wire structure 44'. This wire structure is cut open at both longitudinal ends 54 and this over the full width of the wire structure 44', for example over 1.5 cm and slightly bent, alternatingly left and right.

Referring to Figure 6 the receptacle 12 is formed by an inner cylinder 56 and an outer cylinder 58. The thickness of the inner cylinder is e.g. 1.0 mm. In the inner cylinder 58 four apertures 60 are made by sawing. The side walls are sawed still somewhat more and bent inwardly and squared and form in this way the carrier members 42. These carrier members 42 also function as fixing spot for the wire structures 44' and 44" by pushing the longitudinal ends 54 of the wire structures 44' and 44" over the carrier members 42.

An aperture 50 is made in the outer cylinder 58. Since the outer cylinder can rotate around the inner cylinder 56 the aperture 50 serves both for the filling and the emptying of all chambers 46', 46", 48' and 48".

The embodiment as illustrated in Figure 6 where the wire structures 44' and 44" are taken out, can serve for the baking of four small breads. The eight bent side wall ends which serve as carrier members 42, take care of a good revolution of the small breads with a homogeneous and good baking result.

For the baking of french fries it preferable to insert the wire structures 44' and 44" in the receptacle in order to avoid the french fries from sticking together. As already mentioned hereabove, the subdivision in chambers takes care of the revolution of the articles of food. For example, by the division into four chambers three revolution angles are obtained per chamber. Moreover, for each chamber one carrier member 42 is left.

With an embodiment as shown in Figure 6, a baking time of 1.5 minutes is sufficient for obtaining homogeneously browned and crispy french fries.

The inventor has discovered that even better revolutions of the articles of food can be obtained by wire structures which exhibit a zigzag form over their surface. Indeed by having a zigzagged or, generally a wavy form, the articles of food have more possibilities of point contact with the wire structures so that they can tumble better. Moreover, such a zigzagged or wavy wire structure has a greater heat absorption.

Furthermore, the inventor has discovered a number of measures to even further decrease the baking time in comparison with the already very low baking time with an apparatus as shown in Figure 6. These measures can be summarized as follows. The use of a single cylinder instead of an inner cylinder and an outer cylinder and the reduction of the thickness of the wall of that single cylinder, e.g. from 1.0 mm to 0.5 mm considerably reduce the baking time. Indeed the inventors have experienced that with such measures a baking time of only half a minute (30 seconds) is sufficient for a portion of french fries.

In case of a single cylinder, this single cylinder may comprise several slides in its wall in order to allow the access to the different chambers and in order to fill and to empty the different chambers.

In order to prevent the articles of food to be thrown unwantedly out of the apparatus in case a slide is open, the wire structures may extend over the appertures made by the slides.

## Claims

1. An apparatus (10) for baking of articles of food such as french fries, the apparatus comprising a cylindrical receptacle (12) to house the articles of food and a heating room (14) where means (16, 18, 20) are housed for creating a hot air circulation in the heating room (14) and the receptacle (12), and/or for creating an infrared radiation to the receptacle (12), the receptacle being rotatable around a substantially horizontal axis, the receptacle (12) having a length L and a diameter D,
wherein
the ratio UD of the length to the diameter of the receptacle is smaller than 1.0, **characterized in that** the heating room is rotatable with the receptacle.

2. An apparatus (10) according to claim 1 wherein the ratio UD is smaller than 0.8.

3. An apparatus (10) according to claim 1 or 2 wherein the receptacle (12) is divided into two or more chambers (46, 48).

4. An apparatus (10) according to claim 3, wherein chambers (46, 48) are separated by means of a wire structure (44).

5. An apparatus (10) according to claim 4 wherein said wire structure (44) has a wavy or zigzag form.

6. An apparatus (10) according to one of the preceding claims wherein the receptacle (12) is further provided with carrier members (42) to subject the articles of food to a continuous movement during the rotation of the receptacle (12).

7. An apparatus (10) according to claim 6 wherein the receptacle (12) comprises a central and substantially horizontal rod (40), the carrier members (42) being radially attached on this rod.

8. An apparatus (10) according to claim 6 wherein the receptacle (12), at the other side of the heating room (14), is closed by means of a frontal plate (38), the rod (40) being attached to this frontal plate (38) in a substantially horizontal way.

9. An apparatus (10) according to one of the preceding claims, wherein the receptacle (12) and the heating room (14) are jointly or separately mountable.

## Patentansprüche

1. Gerät (10) zum Backen von Lebensmitteln, wie etwa Pommes Frites, wobei das Gerät ein zylindrisches Behältnis (12) umfasst, um die Lebensmittel aufzunehmen, und eine Heizkammer (14), in der Mittel (16, 18, 20) untergebracht sind, um heiße Umluft in der Heizkammer (14) und dem Behältnis (12) zu schaffen und/oder um eine Infrarotstrahlung auf das Behältnis (12) zu schaffen, wobei das Behältnis um eine im Wesentlichen waagerechte Achse drehbar ist, wobei das Behältnis (12) eine Länge L und einen Durchmesser D aufweist,
wobei das Verhältnis L/D der Länge zum Durchmesser des Behältnisses kleiner ist als 1,0,
**dadurch gekennzeichnet, dass** die Heizkammer mit dem Behältnis drehbar ist.

2. Gerät (10) nach Anspruch 1, wobei das Verhältnis L/D kleiner ist als 0,8.

3. Gerät (10) nach Anspruch 1 oder 2, wobei das Behältnis (12) in zwei oder mehrere Kammern (46, 48) unterteilt ist.

4. Gerät (10) nach Anspruch 3, wobei die Kammern (46, 48) durch eine Drahtstruktur (44) getrennt sind.

5. Gerät (10) nach Anspruch 4, wobei die Drahtstruktur (44) eine wellige oder zickzackartige Form aufweist.

6. Gerät (10) nach einem der vorhergehenden Ansprüche, wobei das Behältnis (12) ferner mit Tragelementen (42) versehen ist, um die Lebensmittel einer andauernden Bewegung während der Drehung des Behältnisses (12) zu unterziehen.

7. Gerät (10) nach Anspruch 6, wobei das Behältnis (12) einen mittleren und im Wesentlichen waagerechten Stab (40) umfasst, wobei die Tragelemente (42) radial an diesem Stab befestigt sind.

8. Gerät (10) nach Anspruch 6, wobei das Behältnis (12) auf der anderen Seite der Heizkammer (14) durch eine Vorderplatte (38) geschlossen wird, wobei der Stab (40) an dieser Vorderplatte (38) im Wesentlichen waagerecht angebracht ist.

9. Gerät (10) nach einem der vorhergehenden Ansprüche, wobei das Behältnis (12) und die Heizkammer (14) zusammen oder getrennt montierbar sind.

## Revendications

1. Appareil (10) pour la cuisson d'aliments tels que des frites, qui comprend un réservoir cylindrique (12) pour recevoir les aliments et une chambre de chauffage (14) dans laquelle se trouve des moyens (16, 18, 20) pour créer une circulation d'air chaud dans la chambre de chauffage (14) et le réservoir (12), et/ou pour créer un rayonnement infrarouge dans le réservoir (12), celui-ci pouvant être pivoté autour d'un axe sensiblement horizontal, le réservoir (12) ayant une longueur L et un diamètre D,
dans lequel
le rapport L/D de la longueur sur le diamètre du réservoir est inférieur à 1,0, **caractérisé par le fait que** la chambre de chauffage e peut être pivotée avec le réservoir.

2. Appareil (10) selon la revendication 1, dans lequel le rapport L/D est inférieur à 0,8.

3. Appareil (10) selon la revendication 1 ou 2, dans lequel le réservoir (12) est divisé en deux ou plusieurs compartiments (46,48).

4. Appareil (10) selon la revendication 3, dans lequel les compartiments (46,48) sont séparés au moyen d'une structure en fils (44) .

5. Appareil (10) selon la revendication 4, dans lequel ladite structure en fils (44) a une forme onduleuse ou en zigzag.

6. Appareil (10) selon l'une quelconque des revendications précédentes, dans lequel le réservoir (12) est également pourvu d'éléments porteurs (42) pour donner aux aliments un mouvement continuel lors de la rotation du réservoir (12).

7. Appareil (10) selon la revendication 6, dans lequel le réservoir (12) comprend une tige (40) centrale et sensiblement horizontale, les éléments porteurs (42) étant fixés de manière radiale sur cette tige.

8. Appareil (10) selon la revendication 6, dans lequel le réservoir (12), à l'autre bout de la chambre de chauffage (14), est fermé à l'aide d'une plaque frontale (38), la tige (40) étant fixée à cette plaque frontale (38) d'une façon sensiblement horizontale.

9. Appareil (10) selon l'une quelconque des revendications précédentes, dans lequel le réservoir (12) et la chambre de chauffage (14) peuvent être montés ensemble ou séparément.
